# EUROPÄISCHE PATENTANMELDUNG

(11) **EP 1 023 951 A2**
(43) Veröffentlichungstag der Anmeldung: **02.08.2000**
(21) Anmeldenummer: 99125965.6
(22) Anmeldetag: 27.12.1999
(51) Int. Cl.: B07B 4/00, D06H 7/06, D01G 11/00, B26D 7/18

(54) **Vorrichtung zum Separieren von Deck- und Füllmaterialien bei einer Konfektionierung von Steppdecken**

(30) Priorität: 28.12.1998 DE 19860425
(71) Anmelder: Badenia Bettcomfort GmbH, 77948 Friesenheim (DE)
(72) Erfinder: Köhler, Eberhard, 09127 Chemnitz (DE); Nestler, Michael, 09127 Chemnitz (DE); Rosenbaum, Gert, 09116 Chemnitz (DE); Nendel, Wolfgang, 09569 Schönerstadt (DE); Vettermann, Gert, 09217 Burgstädt (DE); Mölders, Hans-Peter, 77654 Offenburg (DE); Engelhardt, Manfred, 77948 Friesenheim (DE); Keller, Erich, 77948 Friesenheim (DE); Kohler, André, 77948 Friesenheim (DE)

(57) **Zusammenfassung**

Bekannte Vorrichtungen bei einer Steppdeckenherstellung beinhalten fast ausschließlich den Nähprozeß ohne die Separation der unterschiedlichen Materialien zu beachten. Lösungen zur Separation arbeiten so, daß eine Vorzerkleinerung des Ausgangsmaterials erfolgt und über bekannte textiltechnische Wirkprinzipien die Abtrennung wie z.B. bei der Krempel erfolgt. Neben dem extrem hohen technischen Aufwand ist das Trennergebnis nicht ausreichend, da zu viele Stoffstücke in das Füllmaterial gelangen.

Der beim Einfassen der Steppdecke an sich anfallende Randstreifen (6b) wird direkt an einem Näharbeitsplatz (1) abgesaugt und eine Materialtrennung in einem Diffusor (27) erreicht. Zur Trennung der Materialfraktionen sind ein Stoffstreifenbehälter (31) sowie ein Füllmaterialsack (35) mit einem Transportventilator (34) gekoppelt. Der Trennvorgang wird über Lichtschranken 4, 17 und 18 überwacht und auch gesteuert. Durch einen zusätzlichen Klemmarm (11) sowie einen Gabelarm (25) mit Gabelzinken (26) wird eine nahezu vollständige Materialtrennung erreicht. Ein Trennrohr (28a) und (28b) dient der Aufnahme von langen Randstreifen (6b).

Das Hauptanwendungsgebiet liegt in Steppdecken herstellenden Unternehmen. Auch für die Matratzenfertigung ist diese Lösung nutzbar. Weitere Anwendungsgebiete liegen in der Aufbereitung von Randstreifen mit unterschiedlichen Materialfraktionen.

## Beschreibung

### Stand der Technik

Einrichtungen zum Konfektionieren von Steppdecken sind im Stand der Technik bekannt und werden entsprechend angewendet. So wird in EP 200963 A1 ein Verfahren zum kontinuierlichen Steppen von Stoffen mit unterschiedlichen Materialien wie auch Füllungen beschrieben mit dem Ziel die Nähsicherheit und - genauigkeit zu erhöhen. Der bei der Konfektionierung der Steppdecken erforderliche Randbeschnitt wird nicht berücksichtigt. Auch in US 5027726 wird eine automatische Steppmaschine beschrieben, wobei der Steppvorgang von Rolle zu Rolle realisiert wird. Über eine entsprechende x-y-Achsensteuerung wird die Musterung beim Steppvorgang realisiert. Aussagen zur Weiterverarbeitung der beim Einfassen der Steppdecken anfallenden Randstreifen fehlen auch bei diesen Lösungen.
Für das Trennen von Materialgemischen sind aus dem Stand der Technik eine Reihe technischer Lösungen bekannt, die insbesondere die Dichteunterschiede der einzelnen Materialien ausnutzen. Eine bekannte Verfahrenstechnologie ist das Windsichten derartiger Materialien. In OS 32 31 526 ist ein entsprechender Windsichter beschrieben. Voraussetzung ist hierbei, daß die Randstreifen in eine bestimmte Teilchengröße vorzerkleinert werden müssen. Gleichzeitig ist sicherzustellen, daß das Füllmaterial auch von den Randstreifen getrennt werden kann. Besonders problematisch erweist sich der geringe Dichteunterschied zwischen Füll- und Deckmaterial, so daß Verunreinigungen in der Füllmaterialfraktion kaum zu vermeiden sind.

Eine weitere Lösungsmöglichkeit wird in OS 32 02 156 beschrieben. Hierbei wird die Fraktion entsprechend vorzerkleinert und auf eine sich schnell drehende Walze aufgebracht. Dabei haften die Fasern sehr gut in dem Beschlag der Walze, während die Stoffreste nur locker aufliegen. Durch die Zentrifugalkraft werden diese abgeworfen, wobei die Fasern durch den Walzenbeschlag weitertransportiert werden. Eine Abnahme dieser Fasern erfolgt über mechanische Abstreifer. Eine weitere Lösung wird in OS 32 14 294 beschrieben. Hierbei wird das vorher zerkleinerte Material gegen ein Sieb geschleudert. Auf der anderen Seite des Siebes liegt ein Unterdruck an. Dadurch werden die Flocken durch das Sieb gesaugt, während die Stoffreste auf dem Sieb liegenbleiben. Diese werden zeitgleich nach dem Absaugen der Flocken abgeführt. Wesentlicher Nachteil ist, daß das Material nur diskontinuierlich aufgegeben werden kann.

Bei allen technischen Lösungen, die bisher vorgestellt werden, besteht der Nachteil, daß Stoffreste mit in das Füllmaterial gelangen und damit erhebliche Qualitätseinbußen auftreten. Eine Kopplung direkt mit der Nähmaschine ist ebenfalls nicht gegeben, da die Lösungen sehr anlagenintensiv sind.

Ausgehend von diesen Nachteilen ist das Ziel der Erfindung die Schaffung einer Vorrichtung zum automatischen Separieren von Deck- und Füllmaterialien bei einer Konfektionierung von Steppdecken während des Nähvorganges mit getrennt angeordneten Auffangbehältern sowie Rohrleitungen zum Transport der Materialien, wobei an einem Näharbeitsplatz ein Diffusor flexibel angeordnet ist, hierzu ein flexibler Schlauch über einen Einzugstrichter am Näharbeitsplatz befestigt ist, und am Diffusor Rohrstücke angeordnet sind und zwischen den Rohrstücken abdichtend eine Klappe, die über einen Drehmodul schwenkbar befestigt ist, zur Unterbrechung des Saugstromes vor einem Transportventilator angeordnet ist sowie ein Stoffstreifenbehälter und ein Füllmaterialsack mit einer Umschaltweiche und einer Umschaltklappe in Wirkverbindung stehend zur getrennten Erfassung des Füll- bzw. Decklagenmaterials angeordnet sind. Dabei soll sichergestellt werden, daß auch kleine Randstreifenabschnitte nicht in das Füllmaterial gelangen. Damit wird es möglich, das rückgewonnene Füllmaterial zur Herstellung neuer Steppdecken zu nutzen. Die Lösung der Zielstellung erfolgt in der Art, daß in einen Saugluftstrom der Randstreifen gehalten und durch die relativ hohe Strömungsgeschwindigkeit das an den Decklagenstreifen haftende Füllmaterial abgerissen wird. Zur Trennung von Füllmaterial und Decklagen ist ein ansteuerbares Weichensystem vorhanden.

Aufgabe der Erfindung ist es, eine technisch einfache Lösung zur Rückgewinnung von hochwertigem Füllmaterial aus Randstreifen bei der Steppdeckenkonfektionierung zu schaffen sowie produktionsbedingten Abfall zu minimieren, wobei vorzugsweise die erfindungsgemäße Vorrichtung direkt mit dem Nähprozeß gekoppelt werden kann.

### Lösung des Problems bzw. technische Aufgabe

Die technische Aufgabe der Erfindung besteht in der Schaffung einer einfachen technischen Lösung zur Rückgewinnung von Füllmaterial aus Randstreifen bei der Steppdeckenkonfektionierung, wobei eine saubere Trennung in Füll- und Decklagenmaterial erfolgt.

Die technische Aufgabe wird erfindungsgemäß dadurch gelöst, daß mit den Funktionselementen der Vorrichtung innerhalb eines Saugluftstromes das Füllmaterial vom Decklagenmaterial abgetrennt wird und beide Materialkomponenten in separat ansteuerbaren Behältern aufgefangen werden. Die Vorrichtung wird zur Lösung der Aufgabe direkt an die Nähmaschine integriert und arbeitet entsprechend des Nähvorganges unabhängig von der Näherin und voll automatisch mit integrierter Trennung von Füllmaterial und Decklagen.

Zur Lösung der erfindungsgemäßen Aufgabe ist an einer Einzugsklappe (3) am Näharbeitsplatz (1) ein Einzugstrichter (5) angeordnet, an welchem ein flexibler Saugschlauch (6a) zum Absaugen von Randstreifen (6b) mit einem Diffuser (27) verbunden ist. Der Diffusor (27) ist an einem Gestell (28) befestigt, wobei am Diffusor (27) Rohrstücke (7a) und (7b) mit Flanschen (10) befestigt sind und zwischen den Rohrstücken (7a) und (7b) eine Klappe (9) über einen Drehmodul (8) schwenkbar angeordnet ist. Hierdurch kann der durch einen Transportventilator (34) angeordnete Saugstrom unterbrochen werden, wobei zur Betätigung der Klappe (9) ein Sensor (2) direkt am Näharbeitsplatz (1) angeordnet ist und bei geschlossener Einzugsklappe (3) das Signal zum Schalten der Klappe (9) liefert. Zum Verschließen des Einzugstrichters (5) ist zur besseren Handhabung der Näherin beim Fadenwechsel die Einzugsklappe (3) am Näharbeitsplatz (1) schwenkbar angeordnet. Zur Erkennung von auch sehr schmalen Randstreifen (6b) ist eine im Einzugstrichter (5) angeordnete Lichtschranke (4) vorzugsweise als Sensorfeld ausgebildet, vorhanden.

Der eigentliche Trennvorgang erfolgt im Diffusor (27) durch gezielte Beeinflussung der Strömungsgeschwindigkeit und dem damit verbundenen Erreichen von Turbulenzen.

Für das gezielte Erfassen des gesamten Füllmaterials sind Anschlußstutzen (20a) und (20b) in Nähe des Diffusers (27) angeordnet, die einen definierten Abstand aufweisen und innerhalb dieses Abstandes ein Gabelarm (25) mit Gabelzinken (26) über einen Gabeldrehpunkt (24) schwenkbar angeordnet ist. Diese Anordnung gewährleistet die Beibehaltung des Saugluftstromes bei gleichzeitiger Rückhaltung des Füllmaterials. Die Bewegung des Gabelarmes (25) wird so ausgeführt, daß zum besseren Abstreifen des Füllmaterials der Gabelarm (25) eine alternierende Bewegung ausführt. Zur Verarbeitung von kurzen Randstreifen (6b) sowie zur vollständigen Trennung von Füllmaterial und Decklagen auch am Randstreifenende ist ein Klemmarm (11) angeordnet. Ein Klemmarm (11) ist so angeordnet, daß kurze Streifenstücke fixiert sowie das Ende des Randstreifens (6b) gehalten werden. Hierzu ist eine Lichtschranke (4) und Lichtschranken (17), und(18) mit einem Pneumatikzylinder (13) sowie dem Klemmarm (11) in Wirkverbindung stehend angeordnet. Die Anordnung der Lichtschranke (4) sowie der Lichtschranken (17), (18) sind zur Einstellung auf unterschiedliche Streifenlängen verstellbar zueinander angeordnet.

Zur Erfassung der unterschiedlichen Materialkomponenten ist ein Stoffstreifenbehälter (31) sowie ein Füllmaterialsack (35) angeordnet. Für die Trennung der Materialkomponenten sind Trennrohre (28a), (28b) angeordnet, an welchem eine Umschaltklappe (30) und eine Umschaltweiche (29) befestigt sind. Zur Ansteuerung der Umschaltklappe (30) sind die Lichtschranken (4) sowie die Lichtschranken (17) und (18) in Wirkverbindung zueinander stehend angeordnet.

Zum Absaugen von Füllmaterial und Decklagen des Randstreifens (6b) ist ein Transportventilator (34) angeordnet. Zur Erzeugung eines gleichzeitigen Saugstromes im Stoffstreifenbehälter (31) ist in diesem ein Lochblecheinsatz (32) angeordnet, gleichzeitig ist zur Entleerung des Stoffstreifenbehälters (31) eine Entleerungsklappe (39) angeordnet.

Der Transportventilator (34) ist vorzugsweise zwischen dem Stoffstreifenbehälter (31) und dem Füllmaterialsack (35) angeordnet, so daß das Füllmaterial in den Füllmaterialsack geblasen wird. Eine weitere Anordnung besteht darin, daß der Transportventilator (34) hinter dem Stoffstreifenbehälter (31) und dem Füllmaterialsack (35) zugeordnet und dazu an Stelle des Füllmaterialsackes (35) ein Auffangbehälter mit Lochblecheinsatz (32) angeordnet ist.

### Anwendungsgebiet

Die erfindungsgemäße Vorrichtung ist für die Separation von Produktionsabfällen in die jeweilige Materialfraktion vorwiegend in der Steppdeckenproduktion anwendbar. Der Einsatz der Vorrichtung erfolgt vorzugsweise direkt an einer Nähmaschine ohne zusätzlichen Aufwand für die Bedienperson. Sensoriell überwacht erfolgt die Ansteuerung der unterschiedlichen Sammelbehälter. Eine Übertragung auf weitere Anwendungsgebiete wie z.B. in der Matratzenfertigung ist möglich.

### Ausführungsbeispiel

Die erfindungsgemäße Vorrichtung soll nachfolgend an einem Ausführungsbeispiel näher erläutert werden.

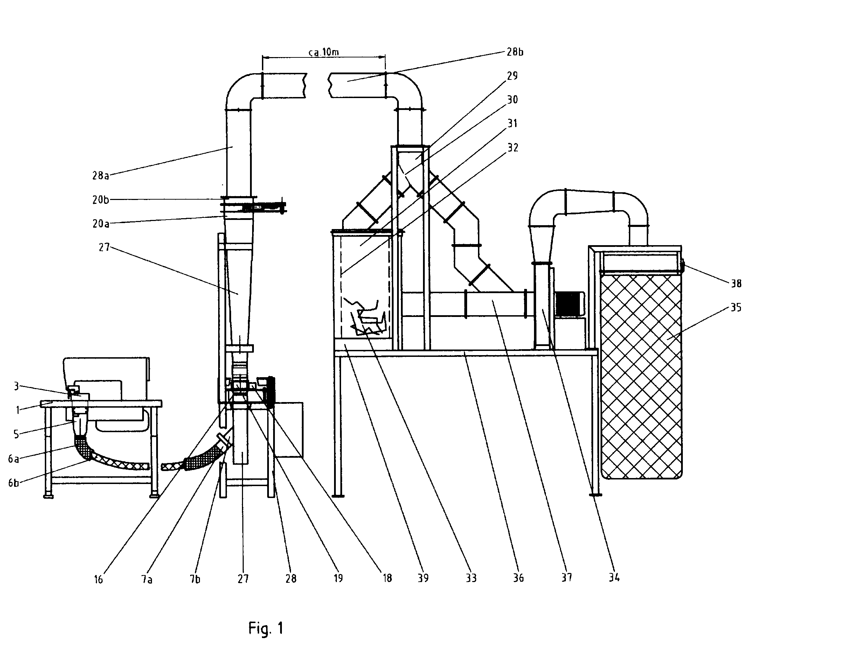

In Fig. 1 ist die Gesamtansicht der erfindungsgemäßen Vorrichtung dargestellt.

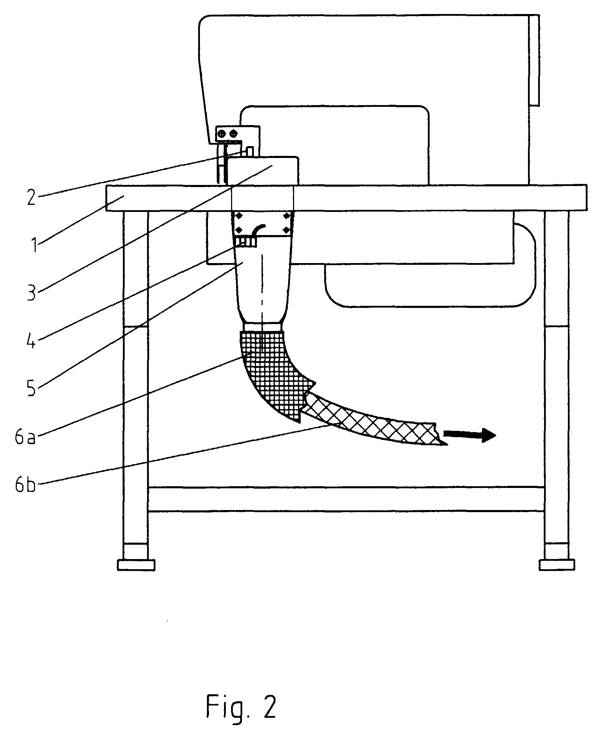

Fig. 2 zeigt die Kopplung an die Nähmaschine.

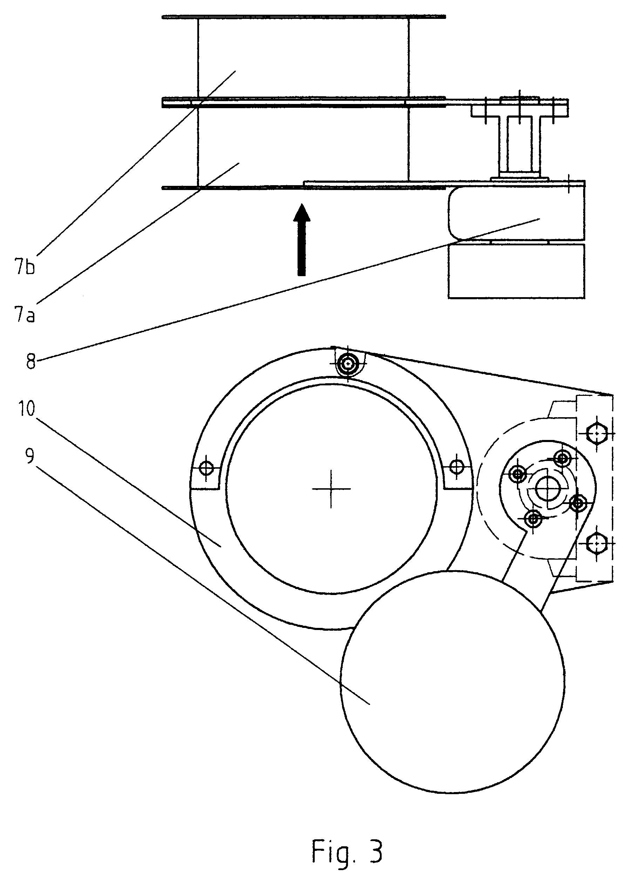

Fig. 3 zeigt die Einrichtung zur Unterbrechung des Saugluftstromes.

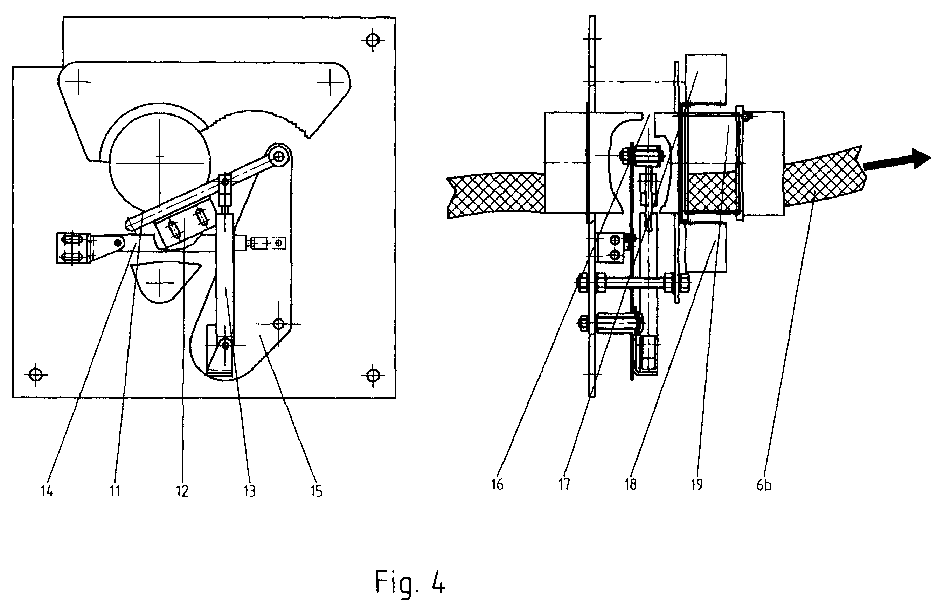

Fig. 4 zeigt die Vorrichtung zum Klemmen der Randstreifen.

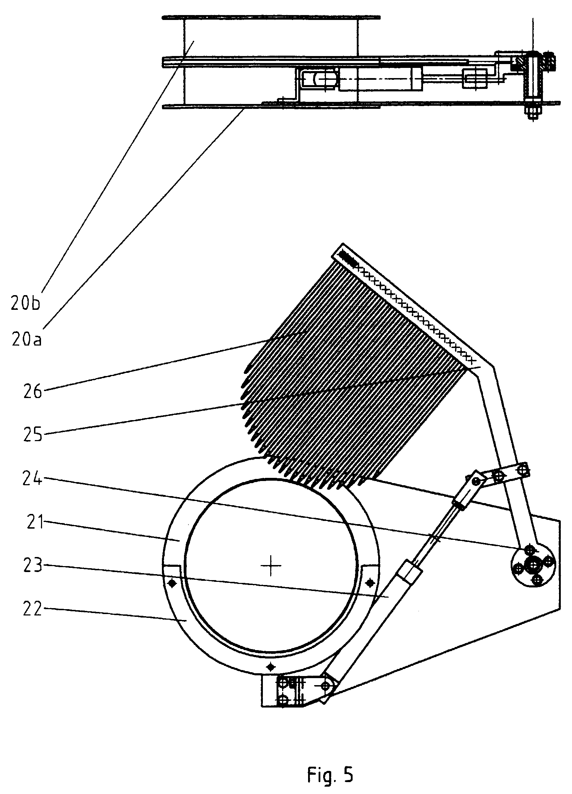

Fig. 5 zeigt die Einrichtung zum Rückhalten des Füllmaterials während des Trennvorganges in der Einlaufphase.

Über einen Saugschlauch 6a, durch welchen ein Randstreifen 6b an einem Näharbeitsplatz 1 abgesaugt wird, ist eine Separiereinrichtung flexibel verbunden. Am Näharbeitsplatz 1 ist ein Einzugstrichter 5 angeordnet, der sich direkt unterhalb einer Einzugsklappe 3 am Näharbeitsplatz 1 befindet. Dabei ist in einem Einzugstrichter 5 eine Lichtschranke 4 angeordnet, um das Vorhandensein von Randstreifen 6b zu erkennen. Eine Lichtschranke 4 ist dabei vorzugsweise als Sensorzeile ausgebildet, um auch sehr schmale Randstreifen 6b zu erkennen. Die Einzugsklappe 3 am Näharbeitsplatz 1 ist schwenkbar angeordnet, um den Einzugstrichter 5 zu verschließen und somit beim Fadenwechsel die Handhabung nicht zu stören. Weiterhin ist am Näharbeitsplatz 1 ein Sensor 2 angeordnet, über welchen bei geschlossener Klappe 9 der Saugstrom abgeschaltet werden kann. Hierzu ist zwischen Rohrstücken 7a und 7b an einem Flansch 10 eine über einen Drehmodul 8 bewegliche Klappe 9 befestigt. Die beiden Rohrstücke 7a und 7b sind direkt nach einem Diffusor 27 angeordnet sowie in deren Anschluß sich die Trennrohre 28a und 28b befinden. Diese gesamte Einheit wird über ein separates Gestell 28 getragen. Der eigentliche Trennvorgang erfolgt in einem Diffusor 27 durch gezielte Beeinflussung der Strömungsgeschwindigkeit und dem damit möglichen Erreichen von Turbulenzen. Damit wird ein Ablösen des Füllmaterials von den Decklagenstreifen erreicht.

Für das definierte Erfassen des gesamten Füllmaterials während des gesamten Separationsvorganges sind in unmittelbarer Nähe des Diffusors 27 Anschlußstutzen 20a und 20b angeordnet, die einen definierten Abstand aufweisen und innerhalb dieses Abstandes ein Gabelarm 25 mit Gabelzinken 26 über einen Gabeldrehpunkt 24 durch einen Arbeitszylinder 23 um einen Gabeldrehpunkt 24 schwenkbar angeordnet ist. Diese Anordnung gewährleistet die Beibehaltung des Saugluftstromes bei gleichzeitiger Rückhaltung des Füllmaterials. Zum besseren Abstreifen des Füllmaterials wird die Bewegung des Gabelarmes 25 alternierend ausgeführt. Die Befestigung des Arbeitszylinders 23 erfolgt über eine Halterung 22 an einem Flansch 21.
Zur Verarbeitung von kurzen Randstreifen 6b sowie zur vollständigen Trennung von Füllmaterial und Decklagen auch am Randstreifenende ist ein Klemmarm 11 angeordnet. Der Klemmarm 11 ist so angeordnet, daß das Ende des Randstreifens 6b gehalten wird. Damit kann in vorteilhafter Weise der Randstreifen 6b im Diffusor 27 separiert werden. Für die Ansteuerung eines Pneumatikzylinders 13 zum Bewegen des Klemmarmes 11 sind die Lichtschranken 4, 17 und 18 in Wechselwirkung zueinander stehend angeordnet. Dabei sind die Lichtschranken 4, 17und 18 zur Einstellung auf unterschiedliche Randstreifenlängen zueinander verstellbar angeordnet. Zur Erkennung des Randstreifens 6b ist zwischen den Lichtschranken 17 und 18 ein lichtdurchlässiges Rohr 19 vorhanden. Die Bewegung des Klemmarmes 11 wird so ausgeführt, daß über einen Pneumatikzylinder 14 ein Schwenkarm 15 mit dem Klemmarm 11 sowie dem Pneumatikzylinder 13 ziehend aus einem Schwenkspalt 16 bewegt werden. Damit wird sichergestellt, daß der Streifen 6b nicht am Klemmarm 11 hängenbleibt. Die Bewegung des Klemmarmes 11 erfolgt beim Bewegen aus dem Schwenkspalt 16 gegen ein Halteblech 12.

Für die Trennung der Materialkomponenten sind Trennrohre 28a und 28b angeordnet, die in ihrer Länge der maximalen Randstreifenlänge angepaßt sind. Im Anschluß an die Trennrohre 28a und 28b ist eine Umschaltklappe 30 und eine Umschaltweiche 29 befestigt, welche eine Trennung in Füllmaterial und Decklagenmaterial vornehmen. Zur Ansteuerung der Umschaltklappe 30 sind die Lichtschranken 4, 17 und 18 in Wirkverbindung zueinander stehend angeordnet. Gleichzeitig erfolgt die Ansteuerung des Klemmhebels 11.

Zum Absaugen des Randstreifens 6b ist vorzugsweise ein Transportventilator 34 angeordnet. Zur Erzeugung eines entsprechenden Saugstromes im Stoffstreifenbehälter 31 ist in diesem ein Lochblecheinsatz 32 angeordnet. Zur Entleerung des Stoffstreifenbehälters 31 von den Stoffstreifen 33 ist eine Entleerungsklappe 39 angeordnet.

Der Transportventilator 34 ist vorzugsweise zwischen dem Stoffstreifenbehälter 31 und einem Füllmaterialsack 35 angeordnet, so daß das Füllmaterial in den Füllmaterialsack 35 geblasen wird. Eine weitere Anordnungsmöglichkeit besteht darin, daß der Transportventilator 34 hinter dem Stoffstreifenbehälter 31 und dem Füllmaterialsack 35 angeordnet ist und dazu an Stelle des Füllmaterialsackes 35 ein Auffangbehälter mit dem Lochblecheinsatz 32 angeordnet ist. Die Befestigung des Füllmaterialsackes 35 erfolgt über einen Schnellverschluß 38, um einen raschen Wechsel bei gefülltem Füllmaterialsack 35 zu garantieren. Die Anordnung von Transportventilator 34 sowie dem Stoffstreifenbehälter 31 erfolgt auf einem Tisch 36, wobei Transportventilator 34 und Stoffstreifenbehälter 31 mit einem T-Stück 37 zur Umschaltweiche 29 verbunden sind.

Der gesamte Ablauf des Separierens wird über eine Steuereinrichtung geregelt und läuft ohne zusätzliche Bedienfunktionen ab.

## Patentansprüche

1. Vorrichtung zum Separieren von Deck- und Füllmaterialien bei einer Konfektionierung von Steppdecken während eines Nähvorganges mit getrennt angeordneten Auffangbehältern sowie Rohrleitungen zum Transport der Materialien, wobei an einem Näharbeitsplatz (1) ein Diffusor (27) flexibel angeordnet ist, hierzu ein flexibler Saugschlauch (6a) über einen Einzugstrichter (5) am Näharbeitsplatz (1) befestigt ist, und am Diffuser (27) Rohrstücke (7a) und (7b) angeordnet sind und zwischen den Rohrstücken (7a) und (7b) abdichtend eine Klappe (9), die über einen Drehmodul (8) schwenkbar befestigt ist, zur Unterbrechung des Saugstromes vor einem Transportventilator (34) angeordnet ist sowie ein Stoffstreifenbehälter (31) und ein Füllmaterialsack (35) mit einer Umschaltweiche (29) und einer Umschaltklappe (30) in Wirkverbindung stehend zur getrennten Erfassung des Füll-bzw. Decklagenmaterials angeordnet sind.

2. Vorrichtung nach Anspruch 1, gekennzeichnet dadurch, daß zur vollständigen Separation der Randstreifen (6b) ein Klemmarm (11) angeordnet ist und am Schwenkarm (15), ein Pneumatikzylinder (14), (13) zur ziehenden Bewegung des Klemmarmes (11) aus dem Einschwenkspalt (16) angeordnet sind.

3. Vorrichtung nach Anspruch 1 und 2, gekennzeichnet dadurch, daß zur vollständigen Rückgewinnung des Füllmaterials über den gesamten Separationsprozeß ein Gabelarm (25), in dem an den Spitzen konisch verlaufende Gabelzinken (26) befestigt sind, über den Gabeldrehpunkt (24) mittels eines Arbeitszylinders (23) schwenkbar zwischen den Anschlußstutzen (20a) und (20b) angeordnet ist.

4. Vorrichtung nach Anspruch 1 bis 3, gekennzeichnet dadurch, daß im Stoffstreifenbehälter (31) ein Lochblecheinsatz (32) zur Gewährleistung eines Saugluftstromes angeordnet ist.

5. Vorrichtung nach Anspruch 1 bis 5, gekennzeichnet dadurch, daß zur Ansteuerung einer Umschaltklappe (30), eines Gabelarmes (25) und eines Klemmarmes (11) zueinander verstellbare Lichtschranken (4), (17) und (18) angeordnet sind.

6. Vorrichtung nach Anspruch 1 bis 6, gekennzeichnet dadurch, daß eine Lichtschranke (4) zur Erkennung von sehr schmalen Randstreifen (6b) als Sensorzeile angeordnet ist.

7. Vorrichtung nach Anspruch 1 bis 7, gekennzeichnet dadurch, daß zur schnellen Entnahme von Stoffstreifen (33) aus einem Stoffstreifenbehälter (31) eine Entleerungsklappe (39) angeordnet ist.

8. Vorrichtung nach Anspruch 1 bis 8, gekennzeichnet dadurch, daß zur ausschließlichen Nutzung des Saugluftstromes ein Transportventilator (34) nach dem Stoffstreifenbehälter (31) und einem Füllmaterialsack (35) angeordnet ist.
